(19) Europäisches Patentamt
European Patent Office
Office européen des brevets

(11) **EP 1 225 154 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(51) Int Cl.:
*C01G 49/08* (2006.01) *C09C 1/24* (2006.01)

(21) Anmeldenummer: **02000125.1**

(22) Anmeldetag: **04.01.2002**

(54) **Verfahren zur Herstellung von Magnetitteilchen**

Method for producing particles of magnetite

Procédé de production de particules de magnétite

(84) Benannte Vertragsstaaten:
**AT BE CH CY DE DK ES FI FR GB GR IE IT LI LU MC NL PT SE TR**

(30) Priorität: **17.01.2001 DE 10101769**

(43) Veröffentlichungstag der Anmeldung:
**24.07.2002 Patentblatt 2002/30**

(73) Patentinhaber: **LANXESS Deutschland GmbH
51369 Leverkusen (DE)**

(72) Erfinder: **Meisen, Ulrich, Dr.
53925 Kall (DE)**

(56) Entgegenhaltungen:
**EP-B- 0 566 790      EP-B- 0 826 635
EP-B- 0 832 848      US-A- 4 990 189**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von Magnetitteilchen.

Teilchenförmige Magnetite, die durch ein Fällverfahren aus wässrigen Lösungen hergestellt werden, sind seit langem bekannt. In US-A 802 928 wird bereits die Herstellung von Magnetit durch Fällung von Eisen-II-sulfat mit einer alkalischen Komponente und anschließender Oxidation mit Luft beschrieben. In zahlreichen weiteren, nachfolgenden Druckschriften wird ebenfalls die Herstellung von Magnetiten nach dem Fällungsverfahren beschrieben.

Die Herstellung von Magnetiten nach dem Fällungsverfahren unter Zusatz von Silicium wird in JP-A-51 044 298 beschrieben. Reine Fällungsmagnetite ohne Zusatz von Fremdelementen können nach DE-A 3 209 469 diskontinuierlich oder nach DE-A 2 618 058 kontinuierlich hergestellt werden. Normalerweise wird $FeSO_4$ als Eisen-II-salz eingesetzt.

Es ist jedoch auch möglich zur Herstellung eines Magnetits nach dem Fällungsverfahren jegliches lösliche Eisen-II-salz einzusetzen. Insbesondere kommt hier der Einsatz von $FeCl_2$, wie in DE-A 3 004 718 beschrieben, in Frage. Der Einsatz von $Fe-SO_4$ oder $FeCl_2$ hat den Vorteil, dass beide Stoffe in großen Mengen sehr preiswert als Abfallstoffe von der eisenverarbeitenden Industrie bezogen werden können. Als Fällungsmittel kommt neben dem am häufigsten eingesetzten Natriumhydroxid auch CaO oder $CaCO_3$ (DE-A 3 004 718), Ammoniak (DE-A 2 460 493) oder $Na_2CO_3$, $MgCO_3$ oder MgO (EP-A 0 187 331) in Frage. Als Oxidationsmittel wird in der Regel Luft eingesetzt. Es werden jedoch auch Verfahren zur Oxidation mit Nitraten (DD-A 216 040 und DD-A 284 478) beschrieben.

Die Magnetite fanden zunächst zur Herstellung von Farben aller Art Anwendung. Der besondere Vorteil von Magnetiten gegenüber organischen Farbstoffen und Russ liegt in ihrer sehr viel besseren Wetterbeständigkeit, so dass Farben mit Magnetit auch im Außenbereich angewendet werden können.

Weiterhin werden Fällungsmagnetite gern zur Einfärbung von Betonformteilen, wie z.B. Betonpflastersteinen oder Betondachsteinen eingesetzt.

Seit geraumer Zeit werden Magnetite auch in der Elektrofotografie zur Herstellung von Tonern verwendet. Zur Herstellung der Toner für Kopiergeräte mit Einkomponententonem werden bevorzugt Magnetite, die nach dem Fällungsverfahren hergestellt wurden, eingesetzt. Der hierfür eingesetzte magnetische Toner muss verschiedene Eigenschaften aufweisen. Mit fortschreitender Entwicklung und Verbesserung der Kopiergeräte und Drucker wurden die Anforderungen an den magnetischen Toner und folglich an den hierfür verwendeten Magnetit immer höher. Die neueste Druckergeneration erreicht eine Auflösung von mehr als 400 dpi (Punkte pro Zoll), wozu die Entwicklung feinteiliger Toner mit sehr enger Teilchengrößenverteilung erforderlich war. Dies hatte zur Folge, dass die hierfür verwendeten Magnetite ebenfalls eine sehr enge Teilchengrößenverteilung aufweisen müssen. Weiterhin ist eine bestimmte Teilchengröße erforderlich, so dass eine homogene Verteilung der Magnetitteilchen im fertigen Toner gewährleistet ist. Die Magnetite selbst müssen einen ausreichend hohen elektrischen Widerstand haben, um das latente Bild während der elektrostatischen Übertragung zu stabilisieren. Weiterhin müssen Koerzitivkraft, Sättigungsmagnetisierung und vor allem die remanente Magnetisierung im richtigen Verhältnis zu den in der Maschine herrschenden Feldstärken sein.

Magnetitpartikel, die zur Herstellung magnetischer Toner geeignet sind werden in EP 0 826 635 B1 und EP0 832 848 B1 beschrieben. Die EP0 832 848 B1 beschreibt dotierte Magnetite mit 0,1 bis 5,0 Gew% P oder 0,1 bis 5,0 Gew% A1. Die EP 0 826 635 B1 beschreibt oktaedrische Magnetite mit einem mittleren Teilchengrößendurchmesser von weniger als 0,6 $\mu$m, einer Koerzitivkraft von 40 bis 100 Oe (bei 10 KOe Messfeld) und einem elektrischen Widerstand von mehr als $1 \times 10^4$ Ohm · cm. Diese Teilchen enthalten vorzugsweise die Elemente Si, Al, Ti, Zr, Mn, Mg oder Zn in Mengen von =,5 bis 4,5 Gew%. Die Verfahren zur Herstellung gemäß EP 0 826 635 B1 und EP 0 832 848 1 sind komplex da die Dotierungselemente in einem oder mehreren separaten Schritten in den richtigen Mengen zugefügt werden müssen.

Der vorliegenden Erfindung lag die Aufgabe zugrunde, ein technisch besonders einfaches und daher auch kostengünstiges Verfahren zur Herstellung von Magnetiten mit einer Koerzitivkraft von 80 bis 130 Oe (= 6,366 KA/m bis 10,345 KA/m) und oktaedrischer Teilchenform für die Herstellung von magnetischen Tonern zur Verfügung zu stellen.

Diese Aufgabe konnte mit dem erfindungsgemäßen Verfahren gelöst werden: Überraschenderweise wurde gefunden, dass durch Erhöhung des Verhältnisses Fe-II zu alkalischer Komponente auf 0,38 bis 0,44, bei Temperaturen von 50 bis 100°C, bevorzugt bei 70 bis 90°C und rascher Oxidation (bis zu 50 mol-% Fe-II) ein für Standardanwendungen im Bereich Toner verwendbarer Magnetit entsteht. Durch die hohe Oxidationsgeschwindigkeit wird das Verfahren besonders wirtschaftlich, da die Anlagen besonders gut ausgenutzt werden können.

Diese so erhältlichen Magnetite können nicht nur in magnetischen Tonern eingesetzt werden, sondern auch zur Einfärbung von Papier, Kunststoff, Lacken, Fasern und Beton und zum Einsatz in Farben verwendet werden.

Magnetite mit einer Koerzitivkraft von 80 bis 130 Oe (= 6,366 KA/m bis 10,345 KA/m) und oktaedrischer Teilchenform sind nach dem erfindungsgemäßen Verfahren erhältlich, indem

    a) eine alkalische Komponente in Form einer wässrigen Lösung unter Schutzgas vorgelegt wird,

b) die alkalische Komponente auf eine Temperatur von 50° bis 100°C, vorzugsweise auf 70° bis 90°C aufgeheizt wird,

d) die unter c) erhaltene Suspension mit einem Oxidationsmittel behandelt wird, so dass sich eine Oxidationsgeschwindigkeit von 20 bis 50 mol-% Fe-II/h einstellt, bis ein Fe-III-Gehalt von mehr als 65 mol-% in der Eisenverbindung vorliegt,

e) nach der Oxidation unter d) erneut eine Fe-II-Komponente in Form einer wässrigen Lösung zu der in d) erhaltenen Suspension in einer Menge gegeben wird, dass ein Molverhältnis von unter c) eingesetztem Fe-II zu einem Äquivalent insgesamt eingesetzter, alkalischer Komponente von 0,47 bis 0,49, erhalten wird,

f) die unter e) erhaltene Suspension erneut mit einem Oxidationsmittel behandelt wird, so dass sich eine Oxidationsgeschwindigkeit von 20 bis 50 mol-% Fe-II/h einstellt, bis ein Fe-III-Gehalt von mehr als 65 mol-% in der Eisenverbindung vorliegt, und dann

g) filtriert und der Rückstand gewaschen, getrocknet und gemahlen wird.

Als alkalische Komponente kann vorzugsweise ein Alkalimetallhydroxid, ein Erdalkalimetallhydroxid, ein Erdalkalimetalloxid, ein Alkalimetallcarbonat, $MgCO_3$ oder Ammoniak eingesetzt werden.

Als Eisen-II-komponente wird vorzugsweise ein wasserlösliches Fe-II-salz eingesetzt, besonders bevorzugt Eisensulfalt oder Eisendichlorid. Es ist jedoch auch möglich andere wasserlösliche Fe-II-Verbindungen einzusetzen, insbesondere wenn diese zu vergleichbaren Preisen zur Verfügung stehen.

Als Oxidationsmittel können vorzugsweise Luftsauerstoff, reiner Sauerstoff, $H_2O_2$, Chlor, Alkalimetallchlorate (z.B. $NaOCl$, $NaClO_3$, $NaClO_4$) oder Nitrate eingesetzt werden. Besonders bevorzugt werden Luftsauerstoff, reiner Sauerstoff, $H_2O_2$ oder Natriumnitrat eingesetzt.

Eine besonders bevorzugte Ausführungsform des erfindungsgemäßen Verfahrens soll im folgenden näher beschrieben werden:

Natronlauge mit einem Gehalt von 300 g NaOH pro Liter Wasser wird in einem diskontinuierlichen Rührkessel unter Rühren und Schutzgasdurchleitung vorgelegt.

Anschließend wird auf eine Temperatur zwischen 50 und 100°C, bevorzugt zwischen 70 und 90°C, aufgeheizt. Ist diese Temperatur erreicht, so wird mit der Dosierung der Fe-II-Komponente begonnen. Die Berechnung der Fe-II-Komponente erfolgt über das angestrebte Verhältnis NaOH/Fe-II. Wird beispielsweise ein NaOH/Fe-II-Verhältnis von 0,55 angestrebt und werden 100 mol NaOH vorgelegt, so müssen 100*0,55 = 55 mol Fe-II-Komponente zugegeben werden. Der Berechnung des Alkalimetallhydroxid/Fe-II-Verhältnisses liegt die Gleichung

$$Fe^{2+} + 2\,NaOH \rightarrow Fe(OH)_2 + 2\,Na^+ \quad Fe\text{-}II/NaOH = 0{,}50$$

zugrunde. Wird eine alkalische Komponente eingesetzt, die in einem anderen stöchiometrischen Verhältnis mit der Fe-II-komponente zu $Fe(OH)_2$ oder $FeCO_3$ reagiert, so ist das Verhältnis entsprechend zu verändern. Dieser Fall tritt z.B. bei der Verwendung von Carbonaten oder Erdkalimetallhydroxiden oder -oxiden auf, so dass sich in diesen Fällen folgende Gleichung ergibt:

$$Fe^{2+} + Ca(OH)_2 \quad Fe(OH)_2 + Ca^{2+} \quad Fe\text{-}II/Ca(OH)_2 : 1{,}0$$

oder

$$Fe^{2+} + Na_2CO_3 \rightarrow FeCO_3 + 2\,Na^+ \quad Fe\text{-}II/Na_2CO_3 : 1{,}0.$$

Die Dosierung der Fe-II-Komponente erfolgt vorzugsweise mit einer solchen Geschwindigkeit, dass kein Abfall der Temperatur auftritt. Nachdem die Zugabe der berechneten Menge der Fe-II-Komponente beendet ist, wird gegebenenfalls nochmals auf 50 bis 100°C aufgeheizt. In vielen Fällen sind die Temperatur unter b) und die Temperatur unter c) identisch, so dass ein nochmaliger Aufheizschritt in c) nicht erforderlich ist. Ist die Temperatur erreicht, so wird die Schutzgasbegasung beendet und mit der Zugabe des Oxidationsmittels begonnen. Im Falle einer Luftbegasung wird Luft über eine Begasungsvorrichtung unterhalb des Rührers eingeleitet. Die pro Stunde zugeführte Luftmenge beträgt zwischen 5 und 15 l/h pro mol Fe-II. Bei Verwendung von $NaNO_3$ wird das Oxidationsmittel als wässrige Lösung innerhalb von 5 bis 30 Minuten zugepumpt. Die hierbei erforderliche Menge berechnet sich nach:

$$NaNO_3 \text{ [mol]} = Fe\text{-}II \text{ [mol]} * 0{,}67 * 1/8.$$

Für 100 mol Fe-II sind demnach 8,375 mol $NaNO_3$ erforderlich. Die Berechnung der anderen Oxidationsmittel erfolgt entsprechend den Redoxäquivalenten der jeweiligen Oxidationsmittel. Es ist zu beachten, dass nur maximal 66,6 % des Fe-II für die Herstellung von Magnetit oxidiert werden müssen.

Die Oxidation ist vorzugsweise beendet, wenn ein Fe-III-Gehalt von mehr als 65 mol-% erreicht ist. Dies kann durch Redoxtitration festgestellt werden.

Im Anschluss an diese Oxidation wird eine wässrige Lösung einer Fe-II-Komponente zugegeben bis sich ein Verhältnis Fe-II/alkalische Komponente von 0,47 bis 0,49 einstellt. Diese erneute Zugabe von Fe-II dient der vollständige Ausnutzung der vorgelegten alkalischen Komponente. Würde dieser Schritt nicht durchgeführt, so ginge ein beträchtlicher Teil der alkalischen Komponente ins Abwasser, wo er aufwendig neutralisiert werden müsste. Danach wird wieder mit einer Geschwindigkeit von bis zu 50 mol-% Fe-II/h oxidiert bis ein Fe-III-Gehalt von mehr als 65 mol-% erreicht ist.

Nach Abschluss der zweiten Oxidation wird das Produkt filtriert, gewaschen und getrocknet. Vor der Trocknung kann das Produkt zur Verbesserung der Thermostabilität und der Dispergierbarkeit nachbehandelt werden. Hierzu wird vorzugsweise ein Polysiloxan oder organischer Ti-Ester eingesetzt.

Bevorzugt werden folgende Parameter eingestellt:

- Alkalische Komponente: NaOH
- Fe-Komponente: FeSO4
- Reaktionstemperatur: 80 bis 90 °C
- FeS04/NaOH: 0,43 bis 0,41
- Oxidationsgeschwindigkeit 35 bis 50 mol% Fe-II/h
- FeS04/NaOH nach Beendigung erster Oxidation: 0,48

Die nach dem erfindungsgemäßen Verfahren hergestellten Magnetite bzw. die erfindungsgemäßen Magnetite lassen sich besonders vorteilhaft für die Herstellung von Tonern, von Druckfarben und von Farbpasten für Tintenstrahldrucker einsetzen..

Die Messung der Eigenschaften der Magnetite erfolgt nach den nachfolgenden Methoden:

1. Die Farbwerte werden durch Präparation eines Lackes geprüft:

3,2 g Magnetit werden am Microdismembrator (30") mit einer Achatkugel von 10 mm Durchmesser gemahlen. Dann werden 2,0 g des Bindemittels Alkydal® F48 (Bayer AG, Leverkusen, DE), 0,1 g des zu prüfenden gemahlenen Magnetits und 1,0 g $TiO_2$ (Bayertitan® R-FK2; Bayer AG, Leverkusen, DE) auf einer Tellerfarbausreibmaschine der Fa. Engelsmann mit einem Durchmesser von 250 mm (auch Muller genannt) angerieben.

Die Farbwerte L* (Helligkeit), a* (Rotstich) und b* (Blaustich) werden nach DIN 55 986 mit Dataflash 2000 (d/8°), Gerät A und dem Auswerteprogramm CIELAB2 vom 19.10.1989 bestimmt. Die gesamte Verfahrensweise der Farbmessung ist ausführlich in EP-A 0 911 370 beschrieben.

2. Die Magnetwerte (Koerzitivkraft, spezifische Sättigungsmagnetisierung) spezifische remanente Magnetisierung) werden am Magnetometer der Fa. Bayer (bei 5000 Oe Feldstärke (entspr. 397,9KA · $m^{-1}$) gemessen.

3. Die BET-Oberfläche wird nach DIN 66 131 gemessen:

Gasgemisch: 90 % He. 10 % $N_2$; Messtemperatur: 77,4 K;
Ausheizen bei 140°C, 60 Minuten.

4. Elementanalyse für Si und Mn:

Si wird spektralanalytisch durch ICP-OES bestimmt. Mn wird durch Atomabsorptionsspektroskopie bestimmt.

5. Elementanalyse für Fe (gesamt), Fe-II und Fe-III:

Bestimmungen nach DIN 55 913: Der Fe-II-Gehalt wird durch Titration mit $KMnO_4$ mittels eines Memotitrators (Mettler DL-70) ermittelt. Fe-III wird analog mit $TiCl_3$ bestimmt. Der Gesamteisengehalt wird aus den beiden Einzelwerten und der Einwaage errechnet. Die Bestimmung der Gehalte der beiden Maßlösungen erfolgt täglich.

6. Teilchenform und Teilchengröße:

Abschätzung der Teilchengröße und -form aus einer transmissionsmikroskopischen (TEM) Aufnahme bei einer 30.000-fachen Vergrößerung.

7. Elementanalyse für S:

Schwefel wird durch ICP-OES bestimmt.

8. Die wasserlöslichen Anteile werden nach ISO-EN 787 Teil 3 bestimmt.

9. Der pH-Wert des Magnetitpulvers wird nach ISO-EN 787 Teil 9 bestimmt.

Die Erfindung soll anhand der nachfolgenden Beispiele näher erläutert werden.

**Beispiele**

**Beispiel 1**

In einen Rührkessel von 30 Liter Nutzvolumen wurden 7876 g Natronlauge mit einem Gehalt von 300 g/l, was 46,67 mol NaOH entspricht, gegeben. Nach Einschalten der Stickstoffbegasung und des Rührers wurde die Natronlauge auf 80°C aufgeheizt. In 45 Minuten wurden nun 13,430 Liter Eisen-II-sulfatlösung mit einem Gehalt von 237,54 g/l, was 21 mol Fe-II entspricht, zugepumpt. Das $FeSO_4$/NaOH-Verhältnis betrug 0,45. Dann wurde die Stickstoffbegasung abgestellt und mit 200 l/h Luft über einen unter dem Rührer angebrachten Begasungsring begast. Die Begasung wurde abgebrochen, nachdem ein Fe-III-Gehalt von 66 mol-% erreicht war. Dann wurde erneut mit Stickstoff begast. Anschließend wurden in 6 Minuten 1100 ml FeSO4-Lösung mit 237,54 g $FeSO_4$/l, was 1,72 mol $FeSO_4$ entspricht, zugepumpt. Das Fe-$SO_4$/NaOH-Verhältnis betrug zu diesem Zeitpunkt 0,487. Anschließend wurde mit 200 l/h Luft bis zu einem Fe-III-Gehalt von 66,8 mol-% oxidiert.

Die Oxidationsgeschwindigkeit betrug 28 mol-% Fe-II/h.

Nach Beendigung der Oxidation wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | |
|---|---|
| Helligkeit L* | : 60,1 CIELAB |
| a* | : -0,3 CIELAB |
| b* | :-6,8 CIELAB |
| Koerzitivkraft | : v105 Oe = 8,355 kA/m |
| spezifische Sättigungsmagnetisierung | : 114,7 $nT/m^3$ |
| spezifische Remanenz | : 24,1 $nTm^3/g$ |
| Teilchengröße | : 0,3 $\mu m$ |
| S-Gehalt | : 0,02 Gew.-%, bestimmt als $SO_3$ |
| Mn-Gehalt | : 0,21 Gew.-% |
| Wasserlösliche Anteile | : 0,13 Gew.-% |
| DIN-pH-Wert | : 8,2 |
| Temperaturstabilität | : 140°C |
| Fe-II-Gehalt | : 29.1 mol% |
| Teilchenform | : Oktaeder |

**Beispiel 2**

In einen Rührkessel von 100 $m^3$ Nutzvolumen wurden 6 800 kg NaOH als Lösung mit einem Gehalt von 300 g/l, was 170 kmol NaOH entspricht, gegeben. Nach Einschalten der Stickstoffbegasung und des Rührers wurde die Natronlauge auf 90°C aufgeheizt. In 22 Minuten wurden nun 39,3 $m^3$ Eisen-II-sulfatlösung mit einem Gehalt von 269,57 g/l, was 69,74 kmol Fe-II entsprach, zugepumpt. Das $FeSO_4$/NaOH-Verhältnis betrug 0,41. Dann wurde die Stickstoffbegasung abgestellt und mit 475 $m^3$/h Luft über einen unter dem Rührer angebrachten Begasungsring begast. Die Begasung wurde abgebrochen, nachdem ein Fe-III-Gehalt von 67 mol-% erreicht war. Dann wurde erneut mit Stickstoff begast. Anschließend wurde in 9 Minuten 5,9 $m^3$ Eisen-II-sulfatlösung mit 269,57 g/l, was 10,47 kmol $FeSO_4$ entspricht,

zugepumpt. Das $FeSO_4$/NaOH-Verhältnis betrug zu diesem Zeitpunkt 0.472. Anschließend wurde mit 475 m$^3$/h Luft bis zu einem Fe-III-Gehalt von 66.8 mol-% weiter oxidiert.

Die Oxidationsgeschwindigkeit betrug 22 mol-% Fe-II/h.

Nach Beendigung dieser Reaktion wurde die Suspension filtriert, mit vollentsalztem Wasser gründlich gewaschen und bei 110°C Abgastemperatur sprühgetrocknet. Das erhaltene Pulver wurde in einer Prallmühle gemahlen.

Der erhaltene Magnetit hatte folgende Eigenschaften:

| | |
|---|---|
| Helligkeit L* | : 60,9 |
| a* | : -0.3 |
| b* | : -6.6 |
| BET-Oberfläche | : 4,2 m$^2$/g |
| Koerzitivkraft | : 110 Oe = 8,753 kA/m |
| spezifische Sättigungsmagnetisierung | : 109,3 nT/m$^3$ |
| spezifische Remanenz | : 20,9 nTm$^3$/g |
| Teilchengröße | : 0.4 $\mu$m |
| S-Gehalt | : 0,09 % $SO_3$ |
| Mn-Gehalt | : 0.24 % |
| wasserlösliche Anteile | : 0.19 % |
| DIN-pH-Wert | : 8.6 |
| Fe-II-Gehalt | : 29,0 mol% |
| Teilchenform | : Oktaeder |

**Patentansprüche**

1.  Verfahren zur Herstellung eines Magnetits mit einer Koerzitivkraft von 6,366 KA/m bis 10,345 KA/m (= 80 bis 130 Oe) und oktaedrischer Teilchenform, **dadurch gekennzeichnet, dass**

    a) eine alkalische Komponente in Form einer wässrigen Lösung unter Schutzgas vorgelegt wird,

    b) die alkalische Komponente auf eine Temperatur von 50° bis 100°C, vorzugsweise auf 70° bis 90°C aufgeheizt wird,

    c) eine Eisen-II-komponente in Form einer wässrigen Lösung in einer Menge zugegeben wird, so dass ein Molverhältnis von Fe-II-komponente zu einem Äquivalent alkalischer Komponente von 0,38 bis 0,45 vorliegt, und wobei die Temperatur auf 50° bis 100°C, vorzugsweise 70° bis 90°C, gehalten wird,

    d) die unter c) erhaltene Suspension mit einem Oxidationsmittel behandelt wird, so dass sich eine Oxidationsgeschwindigkeit von 20 bis 50 mol% Fe-II/h einstellt, bis ein Fe-III-Gehalt von mehr als 65 mol-% in der Eisenverbindung vorliegt,

    e) nach der Oxidation unter d) erneut eine Fe-II-Komponente in Form einer wässrigen Lösung zu der in d) erhaltenen Suspension in einer Menge gegeben wird, dass ein Molverhältnis von unter c) eingesetztem Fe-II zu einem Äquivalent insgesamt eingesetzter, alkalischer Komponente von 0,47 bis 0,49 erhalten wird,

    f) die unter e) erhaltene Suspension erneut mit einem Oxidationsmittel behandelt wird, so dass sich eine Oxidationsgeschwindigkeit von 20 bis 50 mol-% Fe-II/h einstellt, bis ein Fe-III-Gehalt von mehr als 65 mol-% in der Eisenverbindung vorliegt, und dann

    g) filtriert und der Rückstand gewaschen, getrocknet und gemahlen wird.

2.  Verfahren gemäß Anspruch 1, **dadurch gekennzeichnet, dass** als alkalische Komponente Ammoniak, Alkalimetallhydroxide, Erdalkalimetallhydroxide, Erdalkalimetalloxide oder Alkalimetallcarbonate eingesetzt werden.

3.  Verfahren gemäß Anspruch 1 bis 2, **dadurch gekennzeichnet, dass** als Eisen-II-komponente Eisensulfat oder Eisenchlorid eingesetzt wird.

4.  Verfahren gemäß Ansprüchen 1 bis 3, **dadurch gekennzeichnet, dass** als Oxidationsmittel Luftsauerstoff, $H_2O_2$, Chlor, Alkalimetallchlorate oder Nitrat eingesetzt wird.

**Claims**

1. Process for the preparation of a magnetite having a coercive force of Le A 34 993-EP 6,366 KA/m to 10,345 KA/m (=80 to 130 Oe) and an octahedral particle shape **characterized in that**

a) an alkaline component in the form of an aqueous solution is initially introduced under an inert gas,
b) the alkaline component is heated to a temperature of 50° to 100°C, preferably to 70° to 90°C,
c) an iron (II) component in the form of an aqueous solution is added in an amount such that a molar ratio of Fe (II) component to one equivalent of alkaline component of 0.38 to 0.45 is present, the temperature being kept at 50° to 100°C, preferably 70° to 90°C,
d) the suspension obtained under c) is treated with an oxidizing agent so that an oxidation rate of 20 to 50 mol% Fe(II)/h is established, until an Fe(III) content of more than 65 mol% is present in the iron compound.
e) after the oxidation under d), an Fe(II) component in the form of an aqueous solution is added, again to the suspension obtained in d), in an amount such that a molar ratio of Fe(II) used under c) to one equivalent of total alkaline component used of 0.47 to 0.49, preferably 0.44 to 0.46, is obtained,
f) the suspension obtained under e) is treated again with an oxidizing agent so that an oxidation rate of 20 to 50 mol% Fe(II)h is established until Fe(III) content of more than 65 mol% in the iron compound, is present and then
g) filtration is effected and the residue is washed, dried and milled.

2. Process according to Claims 1, **characterized in that** ammonia, alkali metal hydroxides, alkaline earth metal hydroxides, alkaline earth metal oxides or alkaline metal carbonates are used as the alkaline component.

3. Process according to any of Claims 1 to 2, **characterized in that** iron sulphate or iron chloride is used as the iron (II) component.

4. Process according to any of Claims 1 to 3, **characterized in that** atmospheric oxygen, $H_2O_2$, chlorine, alkali metal chlorates or a nitrate is used as the oxidizing agent.


**Revendications**

1. Procédé pour la préparation d'une magnétite présentant une force coercitive de 6,366 KA/m à 10,345 KA/m (= 80 à 130 Oe) et une forme de particule octaédrique, **caractérisé en ce que**

a) on dispose au préalable un composant alcalin sous forme d'une solution aqueuse sous gaz protecteur,
b) on chauffe le composant alcalin à une température de 50°C à 100°C, de préférence de 70°C à 90°C,
c) on ajoute un composant de fer II sous forme d'une solution aqueuse en une quantité telle que le rapport molaire du composant de fer II à un équivalent de composant alcalin est de 0,38 à 0,45, et la température étant maintenue à 50°C jusqu'à 100°C, de préférence à 70°C jusqu'à 90°C,
d) on traite la suspension obtenue au point c) avec un oxydant, de manière telle qu'il se règle une vitesse d'oxydation de 20 à 50% en mole de fer II/h, jusqu'à ce que la teneur en fer III soit supérieure à 65% en mole dans le composé du fer,
e) on introduit après l'oxydation du point d) à nouveau un composant du fer II sous forme d'une solution aqueuse à la suspension obtenue au point d) en une quantité telle qu'on obtient un rapport molaire de fer II utilisé au point c) à un équivalent de composant alcalin utilisé au total de 0,47 à 0,49,
f) on traite à nouveau la suspension obtenue au point e) avec un oxydant, de manière telle qu'il se règle une vitesse d'oxydation de 20 à 50% en mole de fer II/h, jusqu'à ce que la teneur en fer III soit supérieure à 65% en mole dans le composé du fer, puis
g) on filtre et on lave, sèche et broie le résidu.

2. Procédé selon la revendication 1, **caractérisé en ce qu'**on utilise comme composant alcalin de l'ammoniaque, des hydroxydes de métal alcalin, des hydroxydes de métal alcalino-terreux, des oxydes de métal alcalino-terreux ou des carbonates de métal alcalin.

3. Procédé selon la revendication 1 à 2, **caractérisé en ce qu'**on utilise comme composant de fer II du sulfate de fer ou du chlorure de fer.

4. Procédé selon les revendications 1 à 3, **caractérisé en ce qu'**on utilise comme oxydant de l'oxygène de l'air, $H_2O_2$,

du chlore, des chlorates de métal alcalin ou du nitrate.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 802928 A
- JP 51044298 A
- DE 3209469 A
- DE 2618058 A
- DE 3004718 A
- DE 2460493 A
- EP 0187331 A
- DD 216040 A
- DD 284478 A
- EP 0826635 B1
- EP 0832848 B1
- EP 08328481 A
- EP 0911370 A